Europäisches Patentamt

European Patent Office

Office européen des brevets

(19)

(11) Publication number: **0 227 135 B1**

(12)

# EUROPEAN PATENT SPECIFICATION

(45) Date of publication of patent specification: **24.07.91**    (51) Int. Cl.<sup>5</sup>: **C08G 67/02, C08F 6/24**

(21) Application number: **86202008.8**

(22) Date of filing: **14.11.86**

(54) Removal of catalyst remnants from ethene/CO copolymers.

(30) Priority: **26.11.85 NL 8503258**

(43) Date of publication of application:
**01.07.87 Bulletin 87/27**

(45) Publication of the grant of the patent:
**24.07.91 Bulletin 91/30**

(84) Designated Contracting States:
**BE CH DE FR GB IT LI NL**

(56) References cited:
**EP-A- 0 121 965**
**DE-A- 1 645 684**

(73) Proprietor: **SHELL INTERNATIONALE RE-**
**SEARCH MAATSCHAPPIJ B.V.**
**Carel van Bylandtlaan 30**
**NL-2596 HR Den Haag(NL)**

(72) Inventor: **Van Broekhoven, Johannes Ad-**
**rianus Maria**
**Badhuisweg 3**
**NL-1031 CM Amsterdam(NL)**
Inventor: **Doyle, Michael John**
**Badhuisweg 3**
**NL-1031 CM Amsterdam(NL)**

(74) Representative: **Aalbers, Onno**
**P.O. Box 302**
**NL-2501 CH The Hague(NL)**

## Description

The invention relates to a process for the removal of catalyst remnants from ethene/CO copolymers.

High molecular weight linear polymers of carbon monoxide and ethene in which the monomer units occur in alternating order (and which polymers therefore consist of units of the formula -CO-($C_2H_4$)-) can be prepared in the presence of organic palladium phosphine catalysts. Application of these catalysts to a monomer mixture which, in addition to carbon monoxide and ethene comprises one or more other olefinically unsaturated hydrocarbons (A) with less than 20 carbon atoms leads to the formation of polymers with units of the formula -CO-($C_2H_4$)- and similar or dissimilar units of the formula -CO-(A)- occurring randomly distributed within the polymer.

The polymers so prepared have excellent mechanical properties; especially, very high strength, stiffness and impact resistance. The organic palladium phosphine catalysts are incorporated into the polymers and they cannot be completely removed therefrom by washing. The presence of palladium in the polymers is undesirable for two reasons. Firstly it poses problems in the processing of the generally high-melting polymers. This processing - for instance by injection moulding - is effected at a temperature at least 25° C above the melting point of the polymer. At those high temperatures the polymers are subject to thermal instability which is at least in part due to the presence of palladium catalyst remnants in the polymers. Discolouring and decomposition of the polymers results upon injection moulding.

It has now been found that palladium remnants can be removed from the polymers contacting a suspension of the polymers in an organic liquid with certain organic phosphines. In order to achieve the desired objective, at least 0.25 mol of phosphine should be employed per gram atom of palladium present in the polymers. The phosphines that are eligible for this purpose are bidentate ligand phosphines of the general formula $R^1R^2$-P-R-P-$R^3R^4$, wherein $R^1$, $R^2$, $R^3$ and $R^4$ represent hydrocarbon groups which may or may not be substituted with polar groups and R represents a bivalent organic bridging group containing at least two carbon atoms in the bridge. For the sake of brevity these phosphines will hereinafter be referred to as 'BDL' (bidentate ligand) phosphines.

The present invention relates to a process for removing the catalyst remnants from polymers of carbon monoxide with ethene and optionally also one or more other olefinically unsaturated hydrocarbons, which polymers have been prepared in the presence of an organic palladium phosphine catalyst, characterized in that a suspension of the polymer in an organic liquid is contacted with at least 0.25 mol of a bidentate ligand phosphine (BDL phosphine) per gram atom of palladium present in the polymers, which phosphine has the general formula $R^1R^2$-P-R-P-$R^3R^4$, wherein $R^1$, $R^2$, $R^3$ and $R^4$ represent hydrocarbon groups which may or may not be substituted with polar groups and R represents a bivalent organic bridging group containing at least two carbon atoms in the bridge.

In the process according to the invention the quantity of BDL phosphine with which the polymer suspension is contacted should be at least 0.25 mol per gram atom of palladium present in the polymers. Preferably the quantity of BDL phosphine employed is 0.5-10, and in particular 1-3, mol per gram atom of palladium present in the polymers. The treatment of the polymer suspension with the BDL phosphine is preferably carried out at a temperature of 50-140° C and in particular at a temperature of 80-110° C. The organic liquid in the polymer suspension is preferably a lower alcohol, most preferred are methanol and ethanol.

The groups $R^1$, $R^2$, $R^3$ and $R^4$ present in the BDL phoshine preferably contain 6 to 14 carbon atoms. Particularly preferred are BDL phosphines in which the groups $R^1$, $R^2$, $R^3$ and $R^4$ are phenyl groups or alkyl-substituted phenyl groups The bivalent organic bridging group R preferably contains three carbon atoms in the bridge. Examples of suitable BDL phosphines are 1,3-bis(di-p-tolylphosphine)propane, 1,3-bis(diphenylphosphine)-propane and 2-methyl-2-(methyldiphenylphosphine)-1,3-bis-(diphenylphosphine)propane. Preference is given to either one of the latter two BDL phosphines.

In the process according to the invention the product obtained is a polymer having a reduced palladium content and therefore improved thermal stability. In addition, a palladium-containing solution is obtained from which the palladium compound that is formed in the process according to the invention can be separated. By the decomposition of this compound the palladium can be recoverd and subsequently be used again for the preparation of the palladium phosphine composition which is used as the catalyst in the polymerization. The separation of the palladium compound from the palladium-containing solution can be carried out by contacting the solution with a strongly acidic ion exchanger. Instead of the above-described, rather cumbersome route by which fresh catalyst can be prepared by separation, decomposition and synthesis from the palladium compound present in the solution, the present invention provides a much simpler way of attaining the object aimed at. For, the palladium compound present in the solution can be converted into active catalyst by contacting the solution with an oxidant. The preferred quantity of oxidant used therein depends on the quantity and the type of BDL phosphine employed in the process according to the invention. If use is made of a bisphosphine, such as 1,3-bis-(diphenylphosphine)propane, the quantity of oxidant preferably amounts to 0.5-1.5 gram equivalents and in particular 0.75-1.25 gram equivalents per mol of BDL phosphine used. If a trisphosphine, such as 2-methyl-2-(methyldiphenylphosphine)-1,3-bis(diphenylphosphine)-propane is employed, the quantity of oxidant preferably amounts to 1-3 gram equivalents and in particular 1.5-2.5 gram equivalents per mol of BDL phosphine used. The term 'gram equivalent of oxidant' is used in this connection to designate a quantity of oxidant which corresponds with 1 gram atom of oxygen. Eligible oxidants are, amongst others, peroxides, hydroperoxides and oxygen. After treatment with an oxidant, the solution can at once be used for the preparation of an additional amount of polymer.

If the reduction of the palladium content of the polymer obtained in the process according to the invention is considered insufficient, the process can be repeated once or several times. To this end the polymer, after having been separated from the palladium-containing solution, is again allowed to suspend in fresh organic liquid, upon which the suspension is again contacted with a BDL phosphine.

As indicated hereinbefore, the process according to the invention relates to polymers prepared by using an organic palladium phosphine compound as the catalyst. Examples of such catalysts are alkylphosphine and arylphosphine complexes of palladium, such as bis(tributylphosphine)PdCl$_2$, bis(triphenylphosphine)PdCl$_2$, $\pi$-allyl-(triphenylphosphine)PdCl and tetrakis-(triphenylphosphine)Pd.

For the preparation of the present polymers there is a strong preference for the use of catalysts belonging to a class which will be described hereinafter. These catalysts, which possess a much higher activity than those mentioned above, comprise a palladium compound, an anion of an acid with a pKa of less than 2, with the proviso that the acid is not a hydrohalogenic acid, and a BDL phosphine. For the sake of brevity these catalysts will hereinafter be referred to as 'BDL' (bidentate ligand) catalysts. In the preparation of the polymers it is preferred to use a BDL catalyst comprising a palladium salt of a carboxylic acid, in particular palladium acetate. Examples of suitable acids with a pKa of less than 2 (determined in aqueous solution at 18°C) are sulphonic acids, such as methanesulphonic acid, trifluoromethanesulphonic acid and para-toluenesulphonic acid, and carboxylic acids, such as trichloroacetic acid difluoro acetic acid and trifluoroacetic acid. p-Toluenesulphonic acid and trifluorocetic acid are preferred. In the BDL catalyst the anion of the acid with a pKa of less than 2 preferably occurs in a quantity of from 0.5 to 200, and in particular of from 1.0 to 100, equivalents per gram atom of palladium. In the BDL catalysts the BDL phosphine preferably occurs in a quantity of 0.1-2, and in particular of 0.9-1.1, mol per mol of palladium compound. As for the type of BDL phosphine used in the BDL catalysts, the same preferences apply as stated hereinbefore for the BDL phosphine used in the process according to the invention. The quantity of BDL catalyst used in the preparation of the polymers may vary within wide ranges. Per mol of olefinically unsaturated hydrocarbon to be polymerized a quantity of BDL catalyst is employed which preferably comprises from $10^{-7}$ to $10^{-3}$, and in particular from $10^{-6}$ to $10^{-4}$, gram atom of palladium. The preparation of the polymers using a BDL catalyst is preferably carried out at a temperature of 20-150°C and a pressure of 1-200 bar and in particular at a temperature of 30-100°C and a pressure of 20-100 bar.

The process according to the invention relates to the removal of catalyst remnants from polymers of carbon monoxide with ethene and optionally also one or more other olefinically unsaturated hydrocarbons. The latter olefinically unsaturated hydrocarbons preferably have the general formula CHR$_1$ = CHR$_2$, wherein the groups R$_1$ and R$_2$ together contain fewer than 18 carbon atoms and either one of the groups R$_1$ and R$_2$ is a hydrocarbon group, while the other is hydrogen or also a hydrocarbon group. In the latter case R$_1$ and R$_2$ may together form part of a cyclic structure, as in the monomers cyclopentene and cyclohexene. In so far as the groups R$_1$ and R$_2$ are hydrocarbon groups, preference is given to alkyl groups. Especially preferred are monomers in which either one of the groups R$_1$ and R$_2$ is hydrogen, while the other is an alkyl group and more specifically a methyl group. In the mixture to be polymerized the molar ratio of the olefinically unsaturated hydrocarbons relative to carbon monoxide preferably is 10:1-1:5 and in particular 5:1-1:2.

The polymers to which the process according to the invention relates are normally prepared by contacting the monomers at elevated temperature and pressure with a solution of the catalyst in an organic liquid in which the polymers are insoluble. Suitable organic liquids are lower alcohols, such as methanol and ethanol. During the polymerization the polymer is obtained in the form of a suspension in the organic liquid. After the desired level of polymerization is reached, the polymerization is usually terminated by cooling and releasing the pressure. The polymer can be isolated from the suspension by filtration, washing and drying. The process according to the invention can be carried out by re-suspension of a polymer thus prepared and by contacting this suspension with the BDL phosphine. However, the BDL phosphine should preferably be added to the polymer suspension during the polymerization, at the moment of achieving the desired level of monomer conversion, for the polymerization is terminated by this addition.

Example 1 (for comparison)

A carbon monoxide/ethene copolymer was prepared as follows. 200 ml Methanol was introduced into a mechanically stirred autoclave of 300 ml capacity. The air present in the autoclave was expelled therefrom by pressurizing the autoclave with carbon monoxide until a pressure of 50 bar was reached, then releasing the pressure and repeating this treatment twice over. After the contents of the autoclave had been brought to 85°C, a 1:1 carbon monoxide/ethene mixture was introduced under pressure until a pressure of 55 bar was reached. Subsequently a catalyst solution was introduced into the autoclave, consisting of:
12 ml methanol,
0.02 mmol palladium acetate,
0.02 mmol 2-methyl-2-(methyldiphenylphosphine)-1,3-bis(diphenylphosphine)propane and
0.04 mmol para-toluenesulphonic acid.
The pressure was maintained at 55 bar by introducing under pressure a 1:1 carbon monoxide/ethene mixture. After 2 hours the polymerization was stopped by cooling the reaction mixture down to room temperature and releasing the pressure. The copolymer was filtered off, washed with 200 ml methanol and dried at 70°C. 21 g Copolymer with a palladium content of 95 ppmw was obtained, which means that 95% of the palladium present in the catalyst had remained behind in the copolymer.

Example 2

A carbon monoxide/ethene copolymer was prepared in substantially the same way as in Example 1, except that the polymerization was terminated after 2 hours by pumping into the autoclave a solution of 0.04 mmol 2-methyl-2-(methyldiphenylphosphine)-1,3-bis-(diphenylphosphine)propane in 10 ml of methanol. After the temperature had been brought down to room temperature and the pressure had been released, the copolymer was filtered off (yield: 150 ml of filtrate), washed with 200 ml of methanol and dried at 70°C. 21 g Copolymer having a palladium content of 37 ppmw was obtained, which means that only 37% of the palladium present in the catalyst had remained behind in the copolymer.

The 150 ml of filtrate obtained from the filtration of the copolymer was then re-introduced into the autoclave. In this case the air present in the autoclave was not expelled. Therefore, the autoclave contained 1 bar of air. After the contents of the autoclave had been brought to 85°C, a 1:1 carbon monoxide/ethene mixture was introduced under pressure until a pressure of 55 bar was reached. The pressure was maintained at 55 bar by introducing under pressure a 1:1 carbon monoxide/ethene mixture. It was observed that in the course of one hour the rate of polymerization went up from 0 to 4.5 g/hour. This latter value corresponds with the original activity of the palladium catalyst. After some time the activity gradually disappeared, which was caused by the excess of oxygen present in the autoclave in relation to phosphine (150 ml of air in the autoclave 30 ml of oxygen 1 mmol of oxygen; this is a 25-fold excess to the 0.04 mmol of phosphine that was added).

By $^{13}$C-NMR analysis it was found that the carbon monoxide/ethene copolymers prepared according to Examples 1 and 2 had a linear alternating structure and consisted of units of the formula -CO(C$_2$H$_4$)-. The copolymers had a melting point of 257°C. Of Examples 1 and 2 only Example 2 is an example according to the invention. Example 1 falls outside the scope of the invention and has been included for comparison. Example 2 clearly demonstrates that a significant reduction of the palladium content of the polymers can be achieved with the process of this invention, and in addition, that after the process of the invention has been applied and the purified polymer has been filtered off from the suspension, there remains a filtrate from which an active catalyst solution can be prepared in a simple way.

**Claims**

1. Process for removing catalyst remnants from polymers of carbon monoxide with ethene and optionally also one or more other olefinically unsaturated hydrocarbons, which polymers have been prepared in the presence of an organic palladium phosphine catalyst, characterized in that a suspension of the polymer in an organic liquid is contacted with at least 0.25 mol of a bidentate ligand phosphine (BDL phosphine) per gram atom of palladium present in the polymers, which phosphine has the general formula R$^1$R$^2$-P-R-P-R$^3$R$^4$, wherein R$^1$, R$^2$, R$^3$ and R$^4$ represent hydrocarbon groups which may or may not be substituted with polar groups and R represents a bivalent organic bridging group containing at least two carbon atoms in the bridge.

2. Process as claimed in claim 1, characterized in that the polymer suspension is contacted with 0.5-10 mol of the BDL phosphine per gram atom of palladium present in the polymers.

3. Process as claimed in claim 1 or 2 characterized in that the polymer suspension is contacted with the BDL phosphine at a temperature of 50-140°C.

4. Process as claimed in any one or more of claims 1 to 3, characterized in that the organic liquid in which the polymer is held in suspension is a lower alcohol, such as methanol or ethanol.

5. Process as claimed in any one of claims 1 to 4 characterized in that groups $R^1$, $R^2$, $R^3$ and $R^4$ are phenyl groups or alkyl-substituted phenyl groups.

6. Process as claimed in any one of claims 1 to 5, characterized in that the bivalent organic bridging group R contains three carbon atoms in the bridge.

7. Process as claimed in claim 6, characterized in that the BDL phosphine is 1,3-bis(diphenylphosphine)propane or 2-methyl-2-(methyldiphenylphosphine)-1,3-bis-(diphenylphosphine)propane.

8. Process as claimed in any one of claims 1-7, characterized in that after having been contacted with the BDL phosphine, the polymer is separated from the suspension, that the palladium compound present in the remaining solution is converted into active catalyst by contacting the solution with an oxidant and that the catalyst solution thus obtained is employed for the preparation of an additional amount of polymer.

**Revendications**

1. Procédé pour éliminer les résidus de catalyseurs de polymères d'oxyde de carbone avec l'éthène et éventuellement aussi un ou plusieurs autres hydrocarbures oléfiniquement insaturés, ces polymères ayant été préparés en présence d'un catalyseur organique palladiumphosphine, caractérisé en ce qu'une suspension du polymère dans un liquide organique est mise en contact avec au moins 0,25 mole d'une phosphine du type ligand bidenté (phosphine BDL) par atome-gramme de palladium présent dans les polymères, cette phosphine ayant la formule générale $R^1R^2$-P-R-P-

$R^3R^4$, où $R^1$, $R^2$, $R^3$ et $R^4$ représentent des groupes d'hydrocarbures qui peuvent être ou ne pas être substitués par des groupes polaires et R représente un groupe organique bivalent formant pont contenant au moins deux atomes de carbone dans le pont.

2. Procédé selon la revendication 1, caractérisé en ce que la suspension de polymère est mise en contact avec 0,5-10 moles de la phosphine BDL par atome-gramme de palladium présent dans les polymères.

3. Procédé selon la revendication 1 ou 2, caractérisé en ce que la suspension de polymère est mise en contact avec la phosphine BDL à une température de 50-140°C.

4. Procédé selon l'une ou plusieurs quelconques des revendications 1 à 3, caractérisé en ce que le liquide organique dans lequel le polymère est maintenu en suspension est un alcool inférieur, comme le méthanol ou l'éthanol.

5. Procédé selon l'une quelconque des revendications 1 à 4, caractérisé en ce que les groupes $R^1$, $R^2$, $R^3$ et $R^4$ sont des groupes phényle ou des groupes phényle alcoylés.

6. Procédé selon l'une quelconque des revendications 1 à 5, caractérisé en ce que le groupe organique bivalent formant pont R contient trois atomes de carbone dans le pont.

7. Procédé selon la revendication 6, caractérisé en ce que la phosphine BDL est du 1,3-bis-(diphénylphosphine)propane ou du 2-méthyl-2-(méthyldiphénylphosphine)-1,3-bis-(diphénylphosphine)propane.

8. Procédé selon l'une quelconque des revendications 1-7, caractérisé en ce qu'après avoir été mis en contact avec la phosphine BDL, le polymère est séparé de la suspension, le composé du palladium présent dans la solution restante est transformé en catalyseur actif par mise en contact de la solution active avec un oxydant et la solution de catalyseur ainsi obtenue est utilisée pour la préparation d'une quantité supplémentaire de polymère.

**Patentansprüche**

1. Verfahren zur Entfernung von Katalysatorrückständen von Polymeren aus Kohlenmonoxid mit Ethylen und gegebenenfalls auch einem oder mehreren anderen olefinisch ungesättigten Kohlenwasserstoffen, wobei die Polymere hergestellt worden sind in Gegenwart eines organischen Palladium-phosphin-Katalysators, dadurch gekennzeichnet, daß eine Suspension des Polymers in einer organischen Flüssigkeit zusammengebracht wird mit mindestens 0,25 mol eines zweibindigen Phosphinliganden (BDL-Phosphin) pro gAtom Palladium, das in den Polymeren vorhanden ist, wobei das Phosphin die allgemeine Formel $R^1R^2$-P-R-P-$R^3R^4$ aufweist, in der $R^1$, $R^2$, $R^3$ und $R^4$ Kohlenwasserstoffgruppen bedeuten, die mit polaren Gruppen substituiert sein können oder nicht, und R eine zweiwertige organische Brückengruppe bedeutet, die mindestens zwei Kohlenstoffatome in der Brücke enthält.

2. Verfahren nach Anspruch 1, dadurch gekennzeichnet, daß die Polymersuspension mit 0,5 bis 10 mol des BDL-Phosphins pro gAtom Palladium, das in den Polymeren vorhanden ist, zusammengebracht wird.

3. Verfahren nach Anspruch 1 oder 2, dadurch gekennzeichnet, daß die Polymersuspension mit dem BDL-Phosphin bei einer Temperatur von 50 bis 140° C zusammengebracht wird.

4. Verfahren nach einem oder mehreren der Ansprüche 1 bis 3, dadurch gekennzeichnet, daß die organische Flüssigkeit, in der das Polymer in Suspension gehalten wird, ein niederer Alkohol wie Methanol oder Ethanol ist.

5. Verfahren nach einem der Ansprüche 1 bis 4, dadurch gekennzeichnet, daß die Gruppen $R^1$, $R^2$, $R^3$ und $R^4$ Phenylgruppen oder Alkyl-substituierte Phenylgruppen sind.

6. Verfahren nach einem der Ansprüche 1 bis 5, dadurch gekennzeichnet, daß die zweiwertige organische Brückengruppe R drei Kohlenstoffatome in der Brücke enthält.

7. Verfahren nach Anspruch 6, dadurch gekennzeichnet, daß das BDL-Phosphin 1,3-Bis-(diphenyl-phosphin)propan oder 2-Methyl-2-(methyl-diphenylphosphin)-1,3-bis (diphenyl-phosphin) propan ist.

8. Verfahren nach einem der Ansprüche 1 bis 7, dadurch gekennzeichnet, daß das Polymer nach dem Zusammenbringen mit dem BDL-Phosphin von der Suspension abgetrennt wird, daß die in der verbleibenden Lösung vorhandene Palladiumverbindung in einen aktiven Katalysator umgewandelt wird durch Zusammenbringen der Lösung mit einem Oxidationsmittel und daß die so erhaltene Katalysatorlösung für die Herstellung einer weiteren Menge Polymer angewandt wird.